# FASCICULE DE BREVET EUROPEEN

(11) **EP 0 851 559 B1**
(45) Date de publication et mention de la délivrance du brevet: **16.04.2003**
(21) Numéro de dépôt: 97403170.0
(22) Date de dépôt: 29.12.1997
(51) Int. Cl.: H02K 19/06, H02K 19/10, H02K 19/20

(54) **Machine électrique de type synchrone**
Elektrische Maschine synchroner Bauart
Electric machine of the synchronous type

(30) Priorité: 31.12.1996 FR 9616282
(43) Date de publication de la demande: 01.07.1998
(73) Titulaire: VALEO ELECTRONIQUE, 94000 Creteil (FR)
(72) Inventeur: Permuy, Alfred, 92500 Rueil-Malmaison (FR)
(74) Mandataire: Le Forestier, Eric

(56) Documents cités:
- WO-A-91/16538
- DE-A- 3 420 598
- FR-A- 2 075 995
- US-A- 5 051 640
- US-A- 5 365 137

## Description

La présente invention est relative aux machines électriques de type synchrone.

On rappelle à toutes fins utiles que l'on distingue parmi les machines électriques les machines synchrones, les machines asynchrones et les machines à réluctance variable.

On sait que les principes de fonctionnement de ces différents types de machines sont très différents, de sorte qu'il n'est pas envisageable pour l'homme du métier de transposer des solutions connues pour l'un des types de machines aux autres types.

Ainsi, on notera bien que la machine synchrone dont il s'agit ici diffère d'une machine à réluctance variable de par:
- la taille des dents du stator qui recouvrent une demi dent statorique,
- la présence d'un bobinage d'inducteur au stator dans lequel aucune F.C.E.M. n'est induite par la rotation,
- le caractère bipolaire du champ dans les dents du rotor,
- la structure monophasique de chacune des galettes du rotor.

La machine synchrone proposée par l'invention peut être utilisée à la fois comme générateur et comme moteur électrique.

Notamment, elle est avantageusement utilisée dans un véhicule automobile pour y servir d'une part d'alternateur et d'autre part de moteur électrique de démarreur, le rotor de la machine étant directement monté sur l'arbre du moteur thermique du véhicule.

Avec une telle configuration, il est souhaitable que le rotor de la machine synchrone soit le plus équilibré possible et ne présente pas de bobinages et d'aimants permanents.

On connaît déjà par le document FR-2 075 995 une machine électrique comportant un rotor et un stator qui présente chacun une succession d'encoches réparties sur leur circonférence, le rotor étant un empilement de tôles dépourvu d'enroulements conducteurs et d'aimants permanents, le stator présentant des moyens d'aimantation qui définissent au moins une paire de pôles sur celui-ci, ces moyens d'aimantation comportant au moins un enroulement inducteur reçu dans des encoches du stator, les encoches du stator recevant également au moins un enroulement d'induit.

L'invention propose quant à elle une machine électrique selon la revendication 1.

Cette machine est avantageusement complétée par les différentes caractéristiques suivantes prises seules ou selon toutes leurs combinaisons techniquement possibles:
- le stator et le rotor présentent plusieurs étages, chacun des étages du stator recenant un enroulement d'induit correspondant à une phase de la machine;
- les encoches des différents étages du rotor sont, d'un étage à l'autre, décalées angulairement de la largeur entre deux encoches divisée par le nombre d'étages
- les encoches des différents étages du stator sont réparties sur celui-ci sans décalage angulaire d'un étage à l'autre, ledit stator présentant un enroulement inducteur qui est bobiné sur toute sa hauteur et est commun à ses différents étages;
- les enroulements d'induit des différents étages sont bobinés de façon homologue sur les encoches du stator, sans décalage angulaire d'un étage à l'autre

D'autres avantages de l'invention ressortiront encore de la description qui suit. Cette description est purement illustrative et non limitative. Elle doit être lue en regard des dessins annexés sur lesquels:
- la figure 1 est une représentation en développé des encoches du stator et du rotor d'une machine conforme à un mode de réalisation possible de l'invention;
- la figure 2 est une représentation en perspective éclatée et avec arrachés du stator et du rotor d'une machine du type de celle de la figure 1 ;
- la figure 3 illustre le flux et la tension de phase obtenus avec un moteur du type de celui des figures 1 et 2 ;
- la figure 4 est une représentation schématique développée du type de celle de la figure 1, pour une machine biphasée conforme à un mode de réalisation possible de l'invention ;
- la figure 5 est une représentation en perspective semblable à celle de la figure 2, de la machine de la figure 4 ;
- la figure 6 est une représentation en perspective semblable à celle des figures 2 et 5, d'une machine triphasée conforme à un mode de réalisation possible de l'invention.

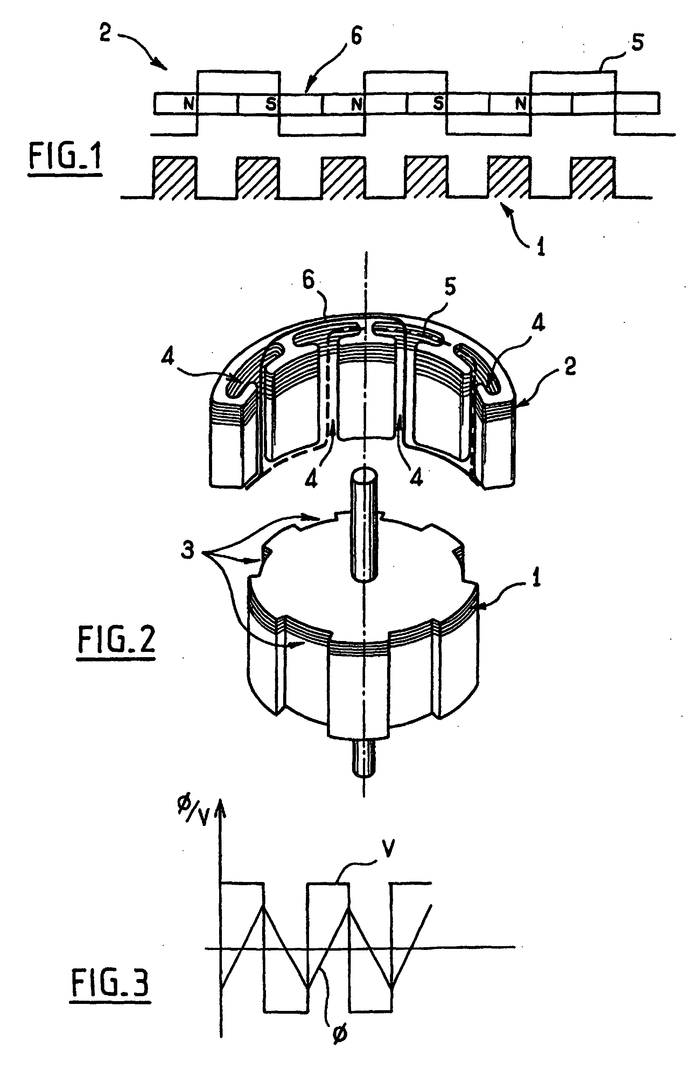

La machine synchrone monophasée illustrée sur les figures 1 et 2 comporte un rotor 1 et un stator 2.

Le rotor 1 est constitué par un empilement de tôles, qui présente une succession d'encoches 3 régulièrement réparties sur sa circonférence.

Contrairement aux rotors des machines synchrones monophasées classiques, le rotor 1 ne présente aucun aimant susceptible de définir des pôles et ses encoches 3 ne reçoivent aucun enroulement conducteur.

Le stator 2 comporte une carcasse constituée par un empilement de tôles. Cette carcasse présente une pluralité d'encoches 4, qui sont réparties sur sa circonférence intérieure et qui reçoivent au moins un enroulement induit 5 et un enroulement inducteur 6.

Le nombre des encoches 4 est le double du nombre des encoches 3.

Les enroulements 5 et 6 sont bobinés sur les encoches 4 non pas en boucle, mais selon une configuration ondulée, l'enroulement induit 5 étant décalé angulairement d'une encoche par rapport à l'enroulement inducteur 6 et s'étendant dans des encoches 4 centrées sur les pôles nord et sud définis par ledit enroulement inducteur 6.

Le flux φ dans l'induit et la tension générée aux bornes de l'enroulement d'induit 6 lors de la rotation du rotor 1 dans le stator 2 présentent des allures illustrées sur la figure 3.

Bien entendu, il pourrait être possible pour réaliser l'inducteur de remplacer l'enroulement 6 par des aimants permanents. Toutefois, les solutions avec enroulement d'inducteur sont préférées étant donné qu'elles permettent de faire varier le champ entre les pôles. De façon connue en soi, cette variation du champ est utilisée en mode générateur pour réguler l'amplitude de la tension aux bornes de l'induit.

D'autres variantes de réalisation sont encore possibles. En particulier, il est possible de prévoir plusieurs bobinages d'induits répartis sur le stator de façon à correspondre à plusieurs phases pour la machine.

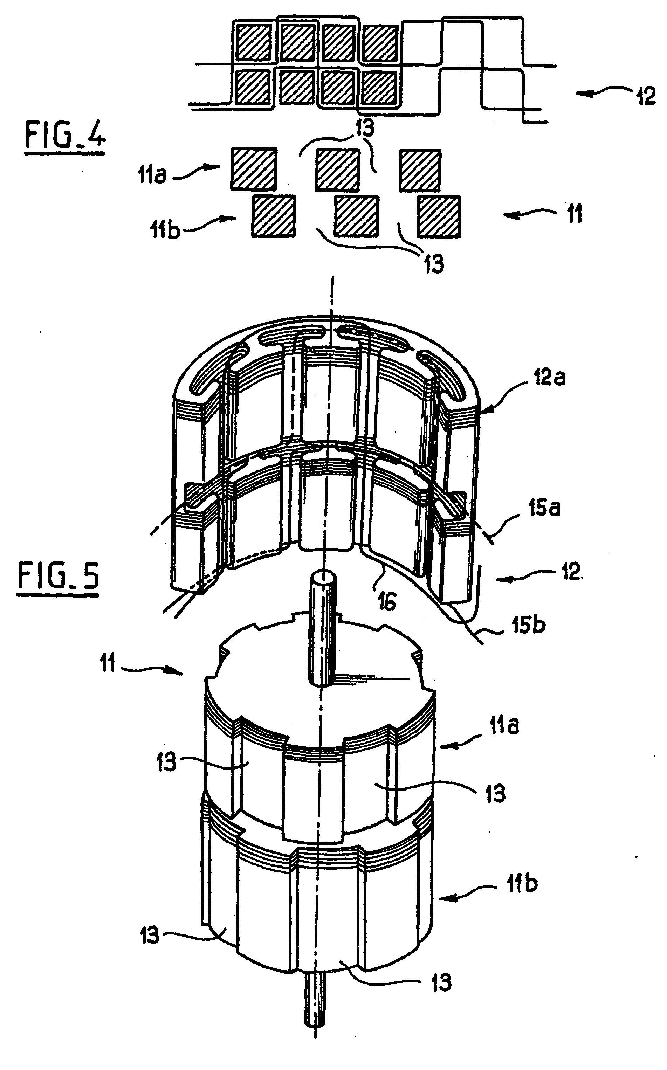

On a illustré sur les figures 4 et 5 un mode de réalisation possible pour une machine bi-phasée conforme à l'invention. Selon ce mode de réalisation, le rotor et le stator, référencés respectivement par 11 et 12, présentent chacun, selon la direction de l'axe de rotation, deux étages superposés.

Les deux étages du rotor 11 - référencés par 11a et 11b - sont respectivement en regard des deux étages - référencés par 12a et 12b - du stator 12. Les deux étages 11a, 11b présentent chacun des encoches 13 qui sont régulièrement réparties sur la circonférence du rotor 11, en étant décalées angulairement d'un étage à l'autre de la moitié de la longueur entre deux encoches.

Les deux étages 12a et 12b du stator 12 présentent des encoches 14 qui s'étendent dans le prolongement les unes des autres d'un étage à l'autre.

Un enroulement inducteur 16 est réparti dans ces encoches 14 selon une configuration ondulée, en étant bobiné sur toute la hauteur du stator 12, les spires dudit enroulement s'étendant dans les encoches 14 des étages 12a et 12b d'une extrémité à l'autre du stator.

Par ailleurs, un enroulement d'induit 15a est bobiné dans les encoches 14 de l'étage 12a, tandis qu'un enroulement d'induit 15b est bobiné dans les encoches 14 de l'étage 12b. Ces enroulements 15a, 15b sont tous deux bobinés selon une configuration ondulée, et ce de façon homologue, c'est à dire sans décalage angulaire l'un par rapport à l'autre

En variante, on pourrait prévoir que ce sont les encoches du stator qui sont décalées d'un étage à l'autre, les encoches de l'un et l'autre des deux étages du rotor étant superposées sans décalage angulaire d'un étage à l'autre. Toutefois, la configuration illustrée sur les figures 4 et 5 présente l'avantage de permettre d'utiliser un enroulement commun pour constituer l'inducteur de l'un et l'autre des deux étages.

De façon plus générale, une machine électrique à n phases conforme à une mode de réalisation possible de l'invention comporte un stator et un rotor qui présentent chacun n étages d'encoches, les encoches du stator ou du rotor étant décalées d'un étage à l'autre de la largeur angulaire entre deux encoches divisée par n.

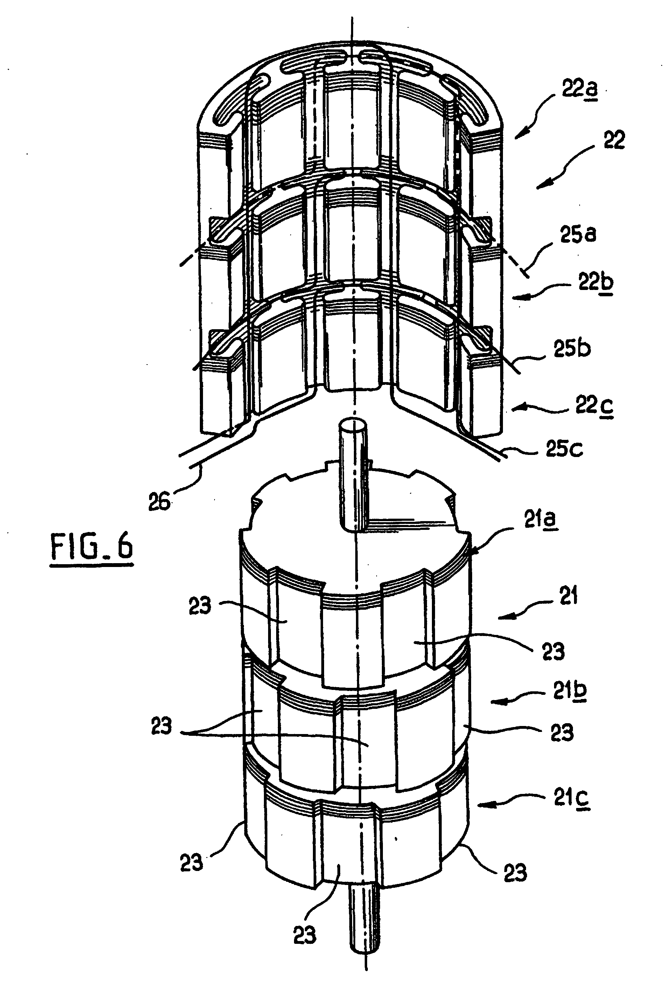

A titre illustratif, on a illustré sur la figure 6 un mode de réalisation d'une machine triphasée en ce sens.

Cette machine comporte un rotor 21 et un stator 22.

Le rotor 21 et le stator 22 présentent chacun trois étages - référencés par 21a à 21c pour le rotor 21 et par 22a à 22c pour le stator 22.

Les encoches 23 de deux étages successifs du rotor 21 sont décalées d'un étage à l'autre de la largeur entre deux encoches divisée par 3. Les encoches 24 des différents étages du stator sont disposées dans le prolongement les unes des autres.

Le stator présente pour chaque étage 22a à 22c un enroulement d'induit 25a à 25c bobiné autour de ses encoches 24. Un enroulement inducteur 26 est bobiné autour des encoches 24 sur toute la hauteur du stator 22.

## Revendications

1. Machine électrique comportant un rotor et un stator qui présente chacun une succession d'encoches réparties sur leur circonférence, le rotor (1, 11, 21) étant un empilement de tôles dépourvu d'enroulements conducteurs et d'aimants permanents, le stator (2, 12, 22) présentant des moyens d'aimantation (6, 16, 26) qui définissent au moins une paire de pôles sur celui-ci, ces moyens d'aimantation (6, 16, 26) comportant au moins un enroulement inducteur reçu dans des encoches (4, 14, 24) du stator (2, 12, 22), les encoches du stator recevant également au moins un enroulement d'induit (5, 15, 25), ladite machine étant **caractérisée en ce qu'**elle est de type synchrone et **en ce que** le nombre d'encoches sur une circonférence du stator est le double du nombre d'encoches du rotor, les enroulements inducteur(s) et induit(s) (5, 6; 15, 16; 25, 26) étant bobinés sur les encoches du stator selon une configuration ondulée, un enroulement induit (5, 15, 25) étant décalé angulairement d'une encoche par rapport à l'enroulement inducteur (6, 16, 26) et s'étendant dans des encoches (4, 14, 24) centrées sur des pôles nord et sud définis par ledit enroulement inducteur (6, 16, 26).

2. Machine synchrone selon la revendication 1, **caractérisée en ce que** le stator (12, 22) et le rotor (11, 21) présentent plusieurs étages, chacun des étages du stator recevant un enroulement d'induit correspondant à une phase de la machine.

3. Machine synchrone selon la revendication 2, **caractérisée en ce que** les encoches (13, 23) des différents étages du rotor sont, d'un étage à l'autre, décalées angulairement de la largeur entre deux encoches divisée par le nombre d'étages.

4. Machine synchrone selon la revendication 3, **caractérisée en ce que** les encoches (14, 24) des différents étages du stator sont réparties sur celui-ci sans décalage angulaire d'un étage à l'autre, ledit stator (12, 22) présentant un enroulement inducteur (16, 26) qui est bobiné sur toute sa hauteur et est commun à ses différents étages.

5. Machine synchrone selon l'une des revendications 3 et 4, **caractérisée en ce que** les enroulements d'induit (15a, 15b) des différents étages sont bobinés de façon homologue sur les encoches du stator, sans décalage angulaire d'un étage à l'autre.

6. Machine synchrone triphasée selon l'une des revendications précédentes.

7. Machine synchrone destinée à être utilisée d'une part comme générateur et d'autre part comme moteur électrique, **caractérisée en ce qu'**elle est du type selon l'une des revendications précédentes.

8. Machine synchrone pour véhicule automobile destinée à être utilisée d'une part comme alternateur et d'autre part comme moteur électrique de démarreur **caractérisée en ce qu'**elle est du type selon l'une des revendication 1 à 6.

9. Machine synchrone selon la revendication 8, **caractérisée en ce que** son rotor est monté sur l'arbre du moteur thermique.

## Claims

1. An electrical machine comprising a rotor and a stator, each having a succession of notches distributed over their circumference, the rotor (1, 11, 21) being a stack of laminations without conductor windings and without permanent magnets, the stator (2, 12, 22) having magnetizing means (6, 16, 26) defining at least one pair of poles thereon, the magnetizing means (6, 16, 26) comprising at least one primary winding received in notches (4, 14, 24) of the stator (2, 12, 22), the notches of the stator also receiving at least one secondary winding (5, 15, 25), said machine being **characterized in that** it is of synchronous type, and **in that** the number of notches around a circumference of the stator is twice the number of notches in the rotor, the primary and secondary windings (5, 6; 15, 16; 25, 26) being wound on the notches of the stator in an undulating configuration, a secondary winding (5, 15, 25) being angularly offset by one notch relative to the primary winding (6, 16, 26), and extending in notches (4, 14, 24) centered on north and south poles defined by said primary winding (6, 16, 26).

2. A synchronous machine according to claim 1, **characterized in that** each of the stator (12, 22) and the rotor (11, 21) has a plurality of stages, each of the stator stages receiving a secondary winding corresponding to one of the phases of the machine.

3. A synchronous machine according to claim 2, **characterized in that** the notches (13, 23) of the various stages of the rotor are, from one stage to another, offset angularly by the width between two notches divided by the number of stages.

4. A synchronous machine according to claim 3, **characterized in that** the notches (14, 24) of the various stages of the rotor are distributed thereon without angular offset from one stage to another, said stator (12, 22) having an inductor winding (16, 26) wound over its full height and common to its various stages.

5. A synchronous machine according to claim 3 or 4, **characterized in that** the secondary windings (15a, 15b) of the various stages are wound in corresponding manner on the notches of the stator without angular offset from one stage to another.

6. A three-phase synchronous machine according to any preceding claim.

7. A synchronous machine for use both as a generator and as an electric motor, the machine being **characterized in that** it is of a type according to any preceding claim.

8. A synchronous machine for a motor vehicle, for use both as an alternator and as an electric starter motor, the machine being **characterized in that** it is of a type according to any one of claims 1 to 6.

9. A synchronous machine according to claim 8, **characterized in that** its rotor is mounted on the shaft of the vehicle engine.

## Patentansprüche

1. Elektrische Maschine mit einem Rotor und einem Stator, die jeweils eine Abfolge von auf ihrem Umfang verteilten Nuten aufweisen, wobei der Rotor (1, 11, 21) ein Blechpaket ohne leitende Wicklungen und Permanentmagneten ist, während der Stator (2, 12, 22) Magnetisierungsmittel (6, 16, 26) aufweist, die darauf wenigstens ein Polpaar definieren, wobei diese Magnetisierungsmittel (6, 16, 26) wenigstens eine in Nuten (4, 14, 24) des Stators (2, 12, 22) aufgenommene Feldwicklung umfassen und wobei die Nuten des Stators außerdem wenigstens eine Ankerwicklung (5, 15, 25) aufnehmen, wobei die besagte Maschine **dadurch gekennzeichnet ist, daß** sie eine Synchronmaschine ist und daß die Anzahl der Nuten auf einem Umfang des Stators doppelt so groß ist wie die Anzahl der Nuten des Rotors, wobei die Feldwicklung(en) und Ankerwicklung(en) (5, 6; 15, 16; 25, 26) auf den Nuten des Stators nach einer gewellten Gestaltung gewickelt sind, wobei eine Ankerwicklung (5, 15, 25) im Verhältnis zur Feldwicklung (6, 16, 26) winklig um eine Nut versetzt ist und sich in Nuten (4, 14, 24) erstreckt, die auf durch die besagte Feldwicklung (6, 16, 26) definierte Nord- und Südpole zentriert sind.

2. Synchronmaschine nach Anspruch 1, **dadurch gekennzeichnet, daß** der Stator (12, 22) und der Rotor (11, 21) mehrere Stufen aufweisen, wobei jede der Stufen des Stators eine Ankerwicklung entsprechend einer Phase der Maschine aufnimmt.

3. Synchronmaschine nach Anspruch 2, **dadurch gekennzeichnet, daß** die Nuten (13, 23) der verschiedenen Stufen des Rotors, von einer Stufe zur anderen, winklig um die Breite zwischen zwei Nuten, geteilt durch die Anzahl der Stufen, zueinander versetzt sind.

4. Synchronmaschine nach Anspruch 3, **dadurch gekennzeichnet, daß** die Nuten (14, 24) der verschiedenen Stufen des Stators auf diesem ohne Winkelversatz von einer Stufe zur anderen verteilt sind, wobei der besagte Stator (12, 22) eine Feldwicklung (16, 26) aufweist, die auf seiner gesamten Höhe gewickelt und seinen verschiedenen Stufen gemeinsam ist.

5. Synchronmaschine nach einem der Ansprüche 3 und 4, **dadurch gekennzeichnet, daß** die Ankerwicklungen (15a, 15b) der verschiedenen Stufen homolog auf den Nuten des Stators, ohne Winkelversatz von einer Stufe zur anderen, gewickelt sind.

6. Dreiphasen-Synchronmaschine nach einem der vorangehenden Ansprüche.

7. Synchronmaschine, die dazu bestimmt ist, einerseits als Generator und andererseits als Elektromotor verwendet zu werden, **dadurch gekennzeichnet, daß** sie in der Bauart nach einem der vorangehenden Ansprüche ausgeführt ist.

8. Synchronmaschine für Kraftfahrzeuge, die dazu bestimmt ist, einerseits als Wechselstromgenerator und andererseits als Elektromotor des Anlassers verwendet zu werden, **dadurch gekennzeichnet, daß** sie in der Bauart nach einem der Ansprüche 1 bis 6 ausgeführt ist.

9. Synchronmaschine nach Anspruch 8, **dadurch gekennzeichnet, daß** ihr Rotor an der Welle des Verbrennungsmotors gelagert ist.
